Europäisches Patentamt

European Patent Office

Office européen des brevets

(19)

(11) **EP 0 894 961 A2**

(12) **EUROPÄISCHE PATENTANMELDUNG**

(43) Veröffentlichungstag:
03.02.1999 Patentblatt 1999/05

(51) Int. Cl.⁶: **F02D 41/14**, F02D 41/10,
F02D 11/10

(21) Anmeldenummer: 98113615.3

(22) Anmeldetag: 22.07.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 02.08.1997 DE 19733472

(71) Anmelder:
DAIMLER-BENZ AKTIENGESELLSCHAFT
70567 Stuttgart (DE)

(72) Erfinder:
• Braun, Hans
70378 Stuttgart (DE)
• Gröne, Michael
73342 Bad Ditzenbach (DE)

(54) **Verfahren zur Verhinderung von Ruckelschwingungen beim positiven und negativen Beschleunigen von Kraftfahrzeugen**

(57) Es wird ein Verfahren zur Verhinderung von Ruckelschwingungen beim positiven und negativen Beschleunigen von Kraftfahrzeugen mit Handschaltgetrieben und mit einem auf einen Antriebsmotor einwirkenden Fahrpedal zur Vorgabe des Motormoments vorgeschlagen. Bei einer Fahrpedalvorgabe zur sprungartigen Änderung des Motormoments von einem Ausgangsmoment zu einem Zielmoment wird dieses Motormoment in zwei Stufen verändert. In der ersten Stufe wird sprungartig ein Zwischenmotormoment vorgegeben, das ausgehend von einem Ausgangswert der Fahrzeugbeschleunigung zu einer Fahrzeugbeschleunigung führt, deren erste sich einstellende Schwingung einen Scheitelwert besitzt, der dem neuen, dem Zielmoment entsprechenden Stationärwert der Fahrzeugbeschleunigung entspricht. Bei Erreichen dieses Scheitelwertes wird in der zweiten Stufe sprung-artig das Zielmoment vorgegeben. Hierdurch können Rukkelschwingungen ohne Zündungseingriff in allen Betriebszuständen wirksam verhindert werden, ohne daß sich das Ansprechverhalten des Fahrzeuges spürbar verschlechtert.

Fig. 2

EP 0 894 961 A2

## Beschreibung

Die Erfindung betrifft ein Verfahren zur Verhinderung von Ruckelschwingungen (Triebstrangschwingungen) beim positiven und negativen Beschleunigen von Kraftfahrzeugen mit Handschaltgetrieben und mit einem auf einen Antriebsmotor einwirkenden Fahrpedal zur Vorgabe des Motormoments.

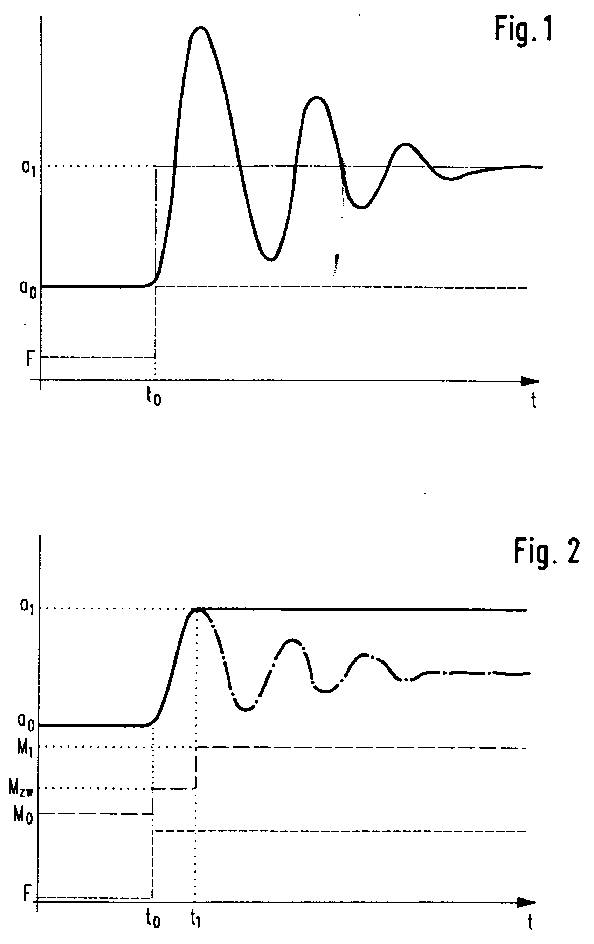

Betätigt der Fahrer eines Kraftfahrzeuges das Fahrpedal zu einem Zeitpunkt $t_o$, so erhöht sich die Fahrzeugbeschleunigung in Abhängigkeit der Fahrpedalbewegung F bzw. des Fahrpedalhubes von einem Ausgangswert $a_o$ auf einen neuen Stationärwert $a_1$. Dieser neuen Stationärbeschleunigung $a_1$ ist gemäß Figur 1 eine abklingende Schwingung überlagert, welche der Fahrer als Ruckelschwingung bzw. Ruckeln empfindet. Ursache dieser Schwingung ist die Energieeinleitung in das Zwei-Massen-Schwingungssystem Motor-Triebstrang-Karosse, d.h. die Karosse schwingt verbunden über die "Torsionsfeder" Triebstrang gegen den Motor. Ein vergleichbarer Effekt ergibt sich, wenn der Fahrer den Fahrpedalhub schnell reduziert.

Dieses Ruckeln stellt eine deutliche Komforteinbuße dar und führt häufig zu Kundenbeanstandungen, die mit entsprechenden Kosten verbunden sind.

Um das Ruckeln zu verhindern oder zumindest zu verringern ist es bekannt, die Ruckelschwingungen durch phasenrichtiges Reduzieren und Erhöhen des Motormoments (Gegenkopplung) zu bedämpfen. Die Reduktion des Motormoments erfolgt beispielsweise durch Spätverschiebung des Zündwinkels. Die Nachteile dieses Verfahrens bestehen darin, daß der Motoreingriff durch die erste Ruckelschwingung getriggert wird, wodurch die erste Ruckelschwingung unvermeidbar ist. Weiterhin sind Zündungseingriffe regelmäßig mit Emissionsverschlechterungen verbunden. Schließlich eignet sich dieses Verfahren nur für das sogenannte Zugruckeln, da über Zündungseingriffe das Motormoment nicht überhöht werden kann, d.h. Schubruckeln nicht bedämpft werden kann.

Ein weiteres bekanntes Verfahren besteht darin, die Fahrervorgabe, also die Fahrpedalbewegung zu bedämpfen, so daß beispielsweise die Drosselklappe mit geringerer Geschwindigkeit geöffnet wird, als durch das Fahrpedal vorgegeben. Hierdurch verschlechtert sich allerdings das Ansprechverhalten des Fahrzeuges spürbar, was ebenfalls häufig zu Kundenbeanstandungen führt.

Eine Aufgabe der vorliegenden Erfindung besteht nun darin, ein Verfahren zur Verhinderung von Ruckelschwingungen der eingangs genannten Gattung zu schaffen, durch das Ruckelschwingungen in allen Betriebszuständen wirksam verhindert werden können, ohne daß sich das Ansprechverhalten des Fahrzeugs merklich verschlechtert.

Diese Aufgabe wird erfindungsgemäß dadurch gelöst, daß bei einer Fahrpedalvorgabe zur sprungartigen Änderung des Motormoments von einem Ausgangsmoment zu einem Zielmoment dieses Motormoment in zwei Stufen verändert wird, wobei in der ersten Stufe sprungartig ein Zwischenmotormoment vorgegeben wird, das ausgehend von einem Ausgangswert der Fahrzeugbeschleunigung zu einer Fahrzeugbeschleunigung führt, deren erste sich einstellende Schwingung einen Scheitelwert besitzt, der dem neuen dem Zielmoment entsprechenden Stationärwert der Fahrzeugbeschleunigung entspricht, und daß in der zweiten Stufe bei Erreichen dieses Scheitelwertes sprungartig das Zielmoment vorgegeben wird.

Das erfindungsgemäße Verfahren vermeidet die Nachteile der bekannten Verfahren, d.h. es ist kein Zündungseingriff erforderlich, der zu Emissionsverschlechterungen führen könnte, bereits die erste Ruckelschwingung wird verhindert, da sie keine Triggerfunktion mehr ausübt, das Ruckeln kann in allen Betriebszuständen verhindert werden und das Ansprechverhalten des Fahrzeuges bleibt nahezu unverändert erhalten, da keine Bedämpfung der Fahrpedalbewegung erforderlich ist.

Durch die in den Unteransprüchen aufgeführten Maßnahmen sind vorteilhafte Weiterbildungen und Verbesserungen des im Anspruch 1 angegebenen Verfahrens möglich.

Die Stufendauer der ersten Stufe und das Zwischenmotormoment wird in vorteilhafter Weise anhand eines Algorithmus und/oder eines Festwertspeicherinhaltes oder Kennfeldes wenigstens in Abhängigkeit der aktuellen Getriebeübersetzung, der Eigenfrequenz der Schwingungsanordnung Motor-Triebstrang-Karosse und des Hubes der Fahrpedalbewegung oder des Hubes des angeforderten Drehmoments eingestellt. Somit kommt das erfindungsgemäße Verfahren mit der ohnehin vorhandenen Hardware, insbesondere mit den ohnehin vorhandenen Sensoren aus.

Diese Einstellung kann weiterhin in Abhängigkeit des aktuellen Torsionszustandes des Triebstranges und/oder in Abhängigkeit der Bewegungsrichtung des Fahrpedals erfolgen.

Die Eigenfrequenz der Schwingungsanordnung Motor-Triebstrang-Karosse wird zweckmäßigerweise während des Fahrzeugbetriebs erfaßt, wobei die im Festwertspeicher oder Kennfeld abgelegten Eigenfrequenzwerte ständig durch die gemessenen Eigenfrequenzwerte adaptiert werden. Hierdurch können z. B. Serienstreuungen und Veränderungen über die Fahrzeuglebensdauer berücksichtigt werden.

Da merkbares Ruckeln erst ab einer vorgebbaren Geschwindigkeit der Pedalbewegung oder ab einem vorgebbaren Pedalhub auftritt, wird die zwei-stufige Veränderung des Motormoments erst ab einer vorgebbaren Geschwindigkeit und/oder ab einem vorgebbaren Hub der Pedalbewegung durchgeführt.

Diagramme zur Erläuterung der Wirkungsweise des erfindungsgemäßen Verfahrens sind in der Zeichnung dargestellt und in der nachfolgenden Beschreibung näher erläutert. Es zeigen:

Figur 1    ein Signaldiagramm zur Erläuterung des Auftretens von Ruckelschwingungen bei herkömmlichen Systemen und

Figur 2    ein Signaldiagramm zur Erläuterung des erfindungsgemäßen Verfahrens, das Rukkelschwingungen vermeidet.

Das Auftreten von Ruckelschwingungen gemäß Figur 1 wurde bereits eingangs im Zusammenhang mit bekannten Verfahren zur Vermeidung von Ruckelschwingungen erläutert.

Beim erfindungsgemäßen Verfahren wird bei einer Betätigung des Fahrpedals F zum Zeitpunkt $t_0$ (untere gestrichelte Linie) das bis zu diesem Zeipunkt vorgegebene Ausgangsmotormoment $M_o$ nicht entsprechend der Fahrpedalbetätigung auf das der Betätigung des Fahrpedals entsprechende Zielmoment $M_1$, sondern lediglich auf ein Zwischenmotormoment $M_{zw}$. Dieses Zwischenmotormoment $M_{zw}$ wird so gewählt, daß der erste Scheitelwert des sich bei einem solchen Motorzwischenmoment einstellenden Schwingung der Fahrzeugbeschleunigung a genau dem neuen Stationärwert $a_1$ der Fahrzeugbeschleunigung entspricht, der dem Zielmoment $M_1$ zugeordnet ist.

Zum Zeitpunkt $t_1$ erreicht die sich einstellende Schwingung der Fahrzeugbeschleunigung a diesen Scheitelwert $a_1$ und würde bei Beibehaltung dieses Motorzwischenmoments dann gemäß der strichpunktierten Linie ausschwingen, d.h. es würden dann Ruckelschwingungen bzw. Triebstrangschwingungen auftreten. Daher wird zum Zeitpunkt $t_1$ das Motormoment vom Motorzwischenmoment $M_{zw}$ auf das Zielmoment $M_1$ angehoben, so daß ein Rückschwingen nicht mehr möglich ist und der neue Wert $a_1$ der Fahrzeugbeschleunigung, der genau dem Zielmoment $M_1$ entspricht, beibehalten wird. Hierdurch werden Ruckelschwingungen sicher verhindert.

Bei einer schnellen Reduzierung der Pedalbetätigung ergibt sich ein vergleichbarer Effekt in der inversen Richtung.

Beim erfindungsgemäßen Verfahren müssen zur Umsetzung der Zugkraftübertragungsfunktion bzw. des Motormomentenverlaufs daher zwei Kenngrößen ermittelt werden, nämlich das Zwischenmoment Mzw und die Stufendauer $T_s = t_1 - t_o$.

Die Stufendauer beschreibt die Zeit zwischen dem Beginn der Schwingung und dem oberen Scheitelwert und entspricht somit einem Viertel der Schwingungsperiodendauer. Diese Schwingungsperiodendauer entspricht dem Kehrwert der Eigenfrequenz $f_e$ des Zwei-Massen-Schwingungssystems Motor-Triebstrang-Karosse. Diese Eigenfrequenz wird von den Massenträgheiten von Motor und Karosse sowie der Feder- und Dämpfungskonstante des Triebstranges bestimmt. Da in der Berechnung die Massenträgheiten auf eine Schwelle reduziert werden müssen, sind auch die Übersetzungen von Schaltgetriebe und Hinterachsgetriebe zu beachten. Die Ruckelfrequenz kann $f_e$ und somit die Stufendauer $T_s$ sind somit gangabhängig. Zur Ermittlung der Stufendauer wird daher innerhalb der Zugkraftübertragungsfunktion ein Algorithmus verwendet, der die Stufendauer in Abhängigkeit der aktuellen Gesamtgetriebeübersetzung und der Eigenfrequenz $f_e$ sowie des Hubes der Fahrpedalbewegung angibt. Ein weiterer Algorithmus dient entsprechend zur Ermittlung des Zwischenmoments $M_{zw}$. Hierbei können noch zusätzlich der aktuelle Torsionszustand des Triebstranges und die Bewegungsrichtung des Fahrpedals berücksichtigt werden.

Anstelle durch Algorithmen können die beiden Kenngrößen auch aus entsprechenden Kennfeldern bzw. einem Festwertspeicher entnommen werden. Die gespeicherten Werte können dabei wiederum anhand von Algorithmen und/oder empirisch festgelegt werden.

Die Eigenfrequenzen $f_e$ des Zwei-Massen-Schwingungssystems können auch während des Fahrzeugbetriebes meßtechnisch erfaßt werden. Durch die erfaßten Meßgrößen können die im Festwertspeicher bzw. Kennfeld abgelegten Eigenfrequenzen bzw. Kenngrößen adaptiert werden. Hierdurch können z.B. Serienstreuungen und Veränderungen über die Fahrzeuglebensdauer berücksichtigt werden. Zur Erfassung dieser Meßgrößen ist es nicht erforderlich, daß ausgeprägte Ruckelschwingungen vorliegen. Bereits schwache Lastwechselschwingungen, die der Fahrer kaum wahrnimmt, können zur meßtechnischen Erfassung der Eigenfrequenzen herangezogen werden.

Die erfindungsgemäße Zugkraftübertragungsfunktion mit der zweistufigen Anhebung des Motormoments kann auf bestimmte Situationen beschränkt werden. Beispielsweise kann diese Zugkraftübertragungsfunktion nur ab einer vorgebbaren Geschwindigkeit der Fahrpedalbewegung oder ab einem vorbestimmten Hub der Fahrpedalbewegung angewandt werden. Weiterhin können Beschränkungen nur auf bestimmte Bewegungsrichtungen des Fahrpedals oder bestimmte Getriebegänge vorgesehen werden.

**Patentansprüche**

1.    Verfahren zur Verhinderung von Ruckelschwingungen beim positiven und negativen Beschleunigen von Kraftfahrzeugen mit Handschaltgetrieben und mit einem auf einen Antriebsmotor einwirkenden Fahrpedal zur Vorgabe des Motormoments, dadurch gekennzeichnet, daß bei einer Fahrpedalvorgabe zur sprungartigen Änderung des Motormoments von einem Ausgangsmoment ($M_o$) zu einem Zielmoment ($M_1$) dieses Motormoment in zwei Stufen verändert wird, wobei in der ersten Stufe sprungartig ein Zwischenmotormoment ($M_{zw}$) vorgegeben wird, das ausgehend von einem Ausgangswert ($a_o$) der Fahrzeugbeschleunigung zu einer Fahrzeugbeschleunigung führt, deren erste sich einstellende Schwingung einen Scheitelwert besitzt, der dem neuen, dem Zielmoment ($M_1$) entsprechenden Stationärwert der Fahrzeugbeschleunigung ($a_1$) entspricht, und daß in der zweiten Stufe bei Erreichen dieses Scheitelwertes sprungartig das Zielmoment ($M_1$) vorgegeben wird.

2. Verfahren nach Anspruch 1, dadurch gekennzeichnet, daß die Stufendauer ($t_1$ - $t_o$) der ersten Stufe anhand eines Algorithmus und/oder eines Festwertspeicherinhaltes oder Kennfeldes wenigstens in Abhängigkeit der aktuellen Getriebeübersetzung, der Eigenfrequenz der Schwingungsanordnung Motor-Triebstrang-Karosse und des Hubes der Fahrpedalbewegung eingestellt wird.

3. Verfahren nach Anspruch 2, dadurch gekennzeichnet, daß die Einstellung weiterhin in Abhängigkeit des aktuellen Torsionszustandes des Triebstranges erfolgt.

4. Verfahren nach Anspruch 2 oder 3, daß die Einstellung weiterhin in Abhängigkeit der Bewegungsrichtung des Fahrpedals erfolgt.

5. Verfahren nach einem der Ansprüche 2 bis 4, dadurch gekennzeichnet, daß die Eigenfrequenz während des Fahrzeugbetriebes meßtechnisch erfaßt wird.

6. Verfahren nach Anspruch 5, dadurch gekennzeichnet, daß die im Festwertspeicher oder Kennfeld abgelegten Eigenfrequenzwerte durch die gemessenen Eigenfrequenzwerte adaptiert werden.

7. Verfahren nach einem der vorhergehenden Ansprüche, dadurch gekennzeichnet, daß die zwei-stufige Veränderung des Motormoments erst ab einer vorgebbaren Geschwindigkeit und/oder einem vorgebbaren Hub der Fahrpedalbewegung durchgeführt wird.

Fig. 1

Fig. 2